# EUROPÄISCHE PATENTSCHRIFT

(11) **EP 1 824 711 B1**
(45) Veröffentlichungstag und Bekanntmachung des Hinweises auf die Patenterteilung: **02.03.2011**
(21) Anmeldenummer: 05822571.5
(22) Anmeldetag: 14.12.2005
(51) Int. Cl.: B60R 21/16

(54) **VERFAHREN UND VORRICHTUNG ZUR UNTERSUCHUNG VON ÖFFNUNGSVORGÄNGEN VON AIRBAGABDECKUNGEN**
METHOD AND DEVICE FOR TESTING OPENING PROCESSES OF AIRBAG COVERS
PROCEDE ET DISPOSITIF POUR EXAMINER DES PROCESSUS D'OUVERTURE DE COUVERCLES D'AIRBAGS

(30) Priorität: 16.12.2004 DE 102004061158; 30.04.2005 DE 102005020217
(43) Veröffentlichungstag der Anmeldung: 29.08.2007
(73) Patentinhaber: PEGUFORM GMBH, 79268 Bötzingen (DE)
(72) Erfinder: GRÜNER, Engelbert, 92339 Beilngries (DE)
(74) Vertreter: Patentanwälte Westphal, Mussgnug & Partner
(86) Internationale Anmeldenummer: PCT/EP2005/013443
(87) Internationale Veröffentlichungsnummer: WO 2006/063816

(56) Entgegenhaltungen:
- DE-A1- 10 315 545
- DE-U1- 9 401 608
- FR-A- 2 730 313
- US-A- 5 850 085

## Beschreibung

Die Erfindung betrifft ein Verfahren sowie eine Vorrichtung zur Untersuchung von Öffnungsvorgängen von Airbagabdeckungen.

Über die vergangenen Jahre hinweg haben sich Airbags in Kraftfahrzeugen nahezu zu einem Sicherheitsstandard entwickelt. Die Airbags bzw. die Airbagsysteme sind dabei üblicherweise derart ausgestaltet, dass ein Luft- bzw. Gassack zusammengefaltet mit einer Gasquelle in einem Airbagmodul angeordnet ist, welches von außen unsichtbar hinter Teilen der Fahrzeuginnenverkleidung angeordnet ist. Die Gasquelle ist mit einer Auslösevorrichtung gekoppelt, welche bei einem Unfall ein explosionsartiges Einströmen von Gas in den Luftsack bewerkstelligt. Hierbei wird die das Airbagmodul verdeckende Verkleidung zumindest teilweise gleichsam weggesprengt, so dass der gasbefüllte Luftsack in den Fahrzeuginnenraum austreten und dort den Aufprall eines Fahrgastes abfedern kann.

Obwohl Airbagsysteme bereits seit vielen Jahren in großen Stückzahlen eingesetzt werden, kommt es nach wie vor zu Fehlfunktionen beim Auslösen des Airbags, dem sogenannten Airbagschuss. So kann es beispielsweise vorkommen, dass der das Airbagmodul verdeckende Teil der Fahrzeuginnenverkleidung, welcher beim Auslösen des Airbags den Weg für den Luftsack in den Innenraum des Fahrzeuges freigeben soll und als Airbagabdeckung bezeichnet wird, seine Funktion nicht oder nur unzureichend erfüllt. Dies kann beispielsweise darauf beruhen, dass der sich entfaltende Luftsack nicht die erforderliche Öffnungskraft aufbringt, welche für ein ordnungsgemäßes Öffnen der Airbagabdeckung erforderlich wäre. Als Gründe hierfür kommen ein in seiner Kraftentfaltung zu schwaches Airbagmodul oder eine zu fest mit übrigen Bestandteilen der Fahrzeugverkleidung oder anderen Bauteilen verbundene Airbagabdeckung in Betracht.

Infolgedessen wäre es wünschenswert, das Öffnungsverhalten einer Airbagabdeckung, insbesondere die für ein ordnungsgemäßes Öffnen erforderliche Öffnungskraft, untersuchen zu können, um das Airbagsystem mit Hilfe der Untersuchungsergebnisse so gestalten zu können, dass bei Bedarf die Entfaltung des Luftsackes nicht beeinträchtigt ist.

Hierfür werden derzeit zwei verschiedene Herangehensweisen verwendet:
Die nahliegendere Variante besteht darin, hinter der Rückseite einer Airbagabdeckung, welche entsprechend ihrer Anordnung im Fahrzeug mit anderen Komponenten der Fahrzeuginnenverkleidung oder anderen Bauteilen verbunden ist, ein Airbagmodul vorzusehen, dies unter realistischen Bedingungen auszulösen und dabei das Öffnungsverhalten der Airbagabdeckung zu untersuchen, beispielsweise mittels einer Hochgeschwindigkeitskamera.

Diese Vorgehensweise ist jedoch mit erheblichen Kosten verbunden, da bei jedem Auslösen des Airbagmoduls, dem sogenannten Airbagschuss dieses sowie die Airbagabdeckung oder zumindest deren Verbindung mit der Innenverkleidung des Fahrzeugs oder anderen Bauteilen zerstört wird. Insbesondere die Airbagmodule fallen hierbei ins Gewicht. Dies um so mehr, als sie eine nicht vernachlässigbare Serienstreuung aufweisen, weswegen vergleichsweise umfangreiche Versuchsreihen notwendig sind, um belastbare Ergebnisse zu erhalten.

In einem anderen angewandeten Verfahren wird die Öffnungskraft bzw. der zugehörige Kraftstoß mittels eines Stempels auf die Airbagabdeckung übertragen und das sich dabei einstellende Öffnungsverhalten derselben beobachtet. Die hierbei eingesetzten Stempel werden üblicherweise mit einer Geschwindigkeit von 2 bis 3 m/s bewegt. Die Übertragung der Öffnungskraft auf die Airbagabdeckung erfolgt damit deutlich langsamer als unter realistischen Bedingungen bei Verwendung eines Airbagmoduls, wobei die Schalttafel üblicherweise mit Geschwindigkeiten im Bereich von 100-150 km/h öffnet.

Ein derartiges Verfahren und eine Vorrichtung entsprechend dem Oberbegriff der Ansprüche 1 und 9. ist beispielsweise in derFR 2730313A1 offenbart Es hat sich jedoch gezeigt, dass Airbagabdeckungen, insbesondere solche, die in Schalttafeln vorgesehen sind, welche üblicherweise aus einem Schichtverbund hergestellt sind, der Kunststofffolien und Kunststoffschäume umfasst, bei Verwendung des beschriebenen Stempels ein gänzlich anderes Öffnungsverhalten zeigen, als bei Verwendung eines Airbagmoduls, bei welchem die Öffnungskraft mit deutlich höherer Geschwindigkeit übertragen wird. Dies rührt daher, dass die verwendeten Materialien sich bei dieser langsamen Kraftübertragung deutlich anders verhalten als unter realistischen Bedingungen.

Der vorliegenden Erfindung liegt somit das Problem zugrunde, ein Verfahren zur Verfügung zu stellen, mit welchem das Öffnungsverhalten einer Airbagabdeckung einfach, insbesondere ohne Verwendung eines Airbagmoduls, bei einer Kraftübertragung auf die Airbagabdeckung mit einer Geschwindigkeit, welche der bei einem Airbagschuss entspricht, untersucht werden kann.

Dieses Problem wird erfindungsgemäß gelöst durch ein Verfahren mit den Merkmalen des Anspruchs 1.

Ferner liegt der Erfindung das Problem zugrunde, eine Vorrichtung zur Verfügung zu stellen, mit welcher das Öffnungsverhalten einer Airbagabdeckung einfach, insbesondere ohne Verwendung eines Airbagmoduls und bei einer Kraftübertragung auf die Airbagabdeckung mit einer Geschwindigkeit, welche derjenigen bei einem Airbagschuss entspricht, untersucht werden kann.

Dieses Problem wird erfindungsgemäß gelöst durch eine Vorrichtung mit den Merkmalen des Anspruchs 9.

Vorteilhafte Weiterbildungen sind jeweils Gegenstand abhängiger Unteransprüche.

Ferner liegt der Erfindung das Problem zugrunde, ein Verfahren und eine Vorrichtung zur Bestimmung der für eine ordnungsgemäβe Öffnung einer Airbagabdeckung erforderlichen Öffnungskraft zu bestimmen.

Diese Probleme werden nach Anspruch 8 gelöst durch die Verwendung des erfindungsgemäßen Verfahrens zur Ermittlung der erforderlichen Öffnungskraft sowie nach Anspruch 22 durch die Verwendung der erfindungsgemäßen Vorrichtung für die Ermittlung der erforderlichen Öffnungskraft.

Der grundliegende Gedanke der Erfindung besteht darin, wenigstens einen gasdichten Gasraum vorzusehen, einen sich in diesem Gasraum ausbreitenden Druckstoß und/oder einen sich in dem Gasraum aufbauenden integralen Druck zu erzeugen und die zu untersuchende Airbagabdeckung mit dem Druckstoß oder dem integralen Druck direkt oder indirekt zumindest lokal zu beaufschlagen. Unter einem integralen Druck ist dabei eine beliebige Kombination von Staudrücken und statischen Drücken zu verstehen.

Auf diese Weise lassen sich Öffnungsvorgänge realisieren, deren zeitliche Abläufe denen beim Airbagschuss entsprechen, so dass sich die in der Airbagabdeckung und in den Verbindungen zwischen Airbagabdeckung und den sie umgebenden Verkleidungen oder Bauteilen vorgesehenen Materialien in derselben Weise verhalten wie bei einem Airbagschuss. Auf die Verwendung eines Airbagmoduls kann dabei verzichtet werden.

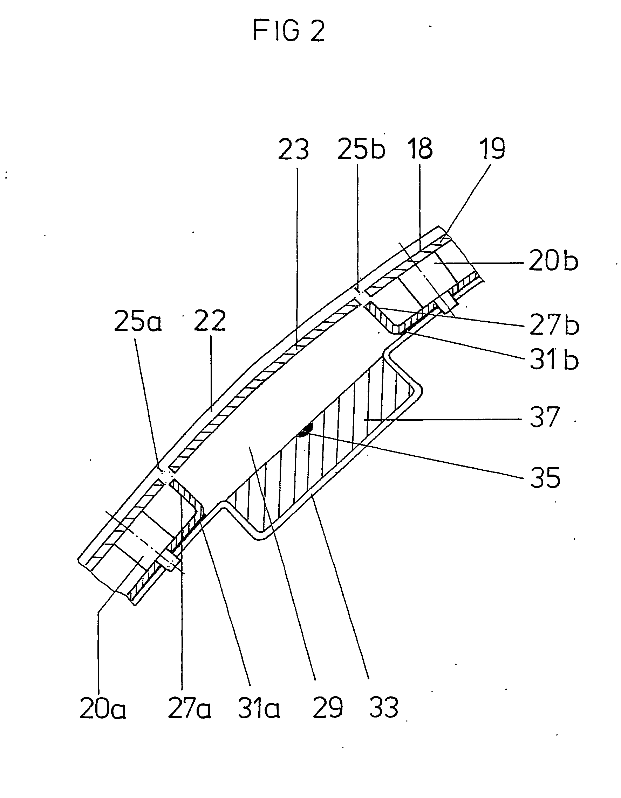

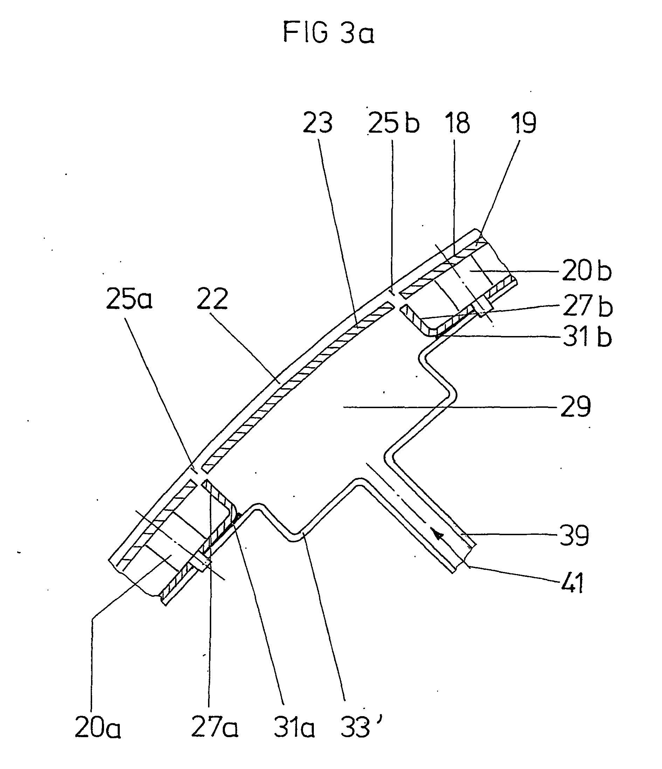

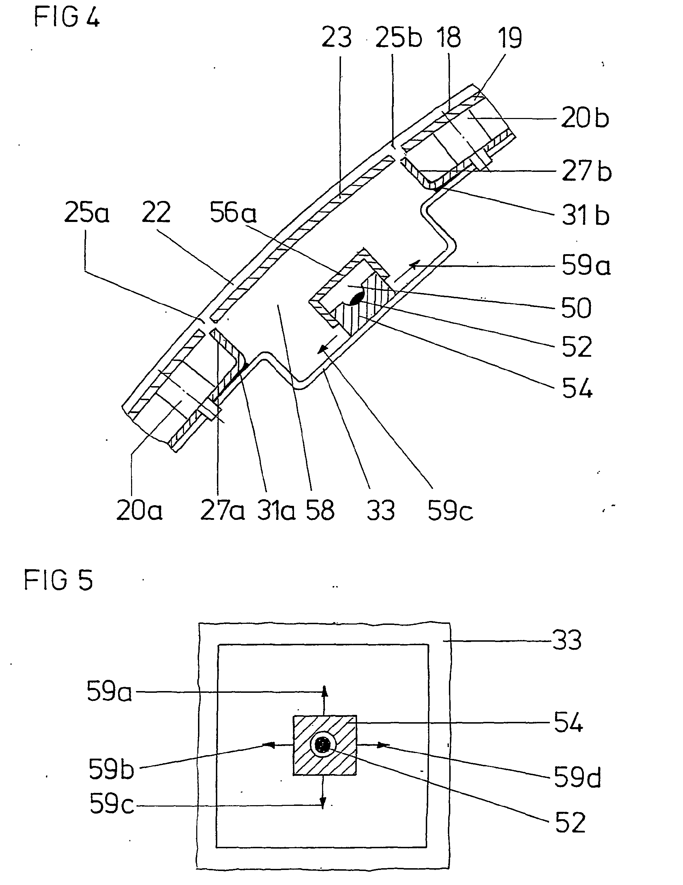

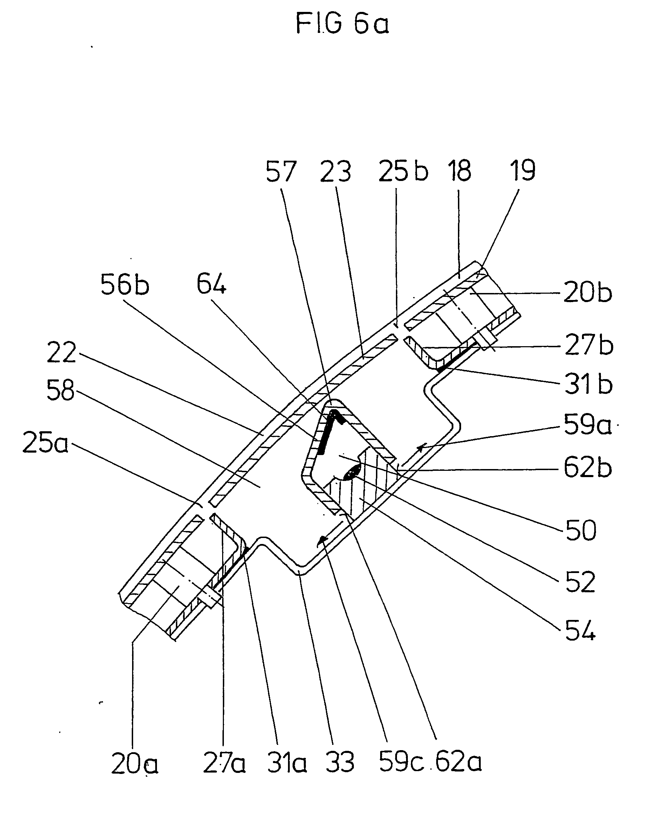

Im Folgenden wird die Erfindung anhand von Figuren näher erläutert. Es zeigen:
Figur 1:
   Schematische Darstellung eines Ausführungsbeispieles eines erfindungsgemäßen Verfahrens zur Untersuchung des Öffnungsvorgangs einer Airbagabdeckung.
Figur 2:
   Ein erstes Ausführungsbeispiel einer erfindungsgemäßen Vorrichtung zur Untersuchung des Öffnungsvorgangs einer Airbagabdeckung; bei welcher zur Erzeugung des Druckstoßes oder des integralen Druckes eine pyrotechnische Ladung vorgesehen ist.
Figur 3a:
   Ein Ausführungsbeispiel einer Vorrichtung, bei welcher der sich aufbauende integrale Druck durch ein in den Gasraum eingeleitetes Gasgemisch erzeugt wird.
Figur 3b:
   Eine alternative Ausgestaltungsvariante des Ausführungsbeispiels aus Figur 3a.
Figur 4:
   Ein drittes Ausführungsbeispiel einer erfindungsgemäßen Vorrichtung, bei welcher zur Kraftübertragung auf die Airbagabdeckung ein Projektil vorgesehen ist.
Figur 5:
   Aufsicht auf die Aufnahme (ohne Projektil) und die pyrotechnische Ladung mit Zündvorrichtung aus Figur 4.
Figur 6a:
   Ein weiteres Ausführungsbeispiel einer erfindungsgemäßen Vorrichtung, bei welcher das Projektil eine Ausformung aufweist, vor Zündung der pyrotechnischen Ladung.
Figur 6b:
   Vorrichtung aus Figur 6a kurz nach Zünden der pyrotechnischen Ladung.
Figur 7:
   Vorrichtung aus Figur 6a, bei welcher das Projektil relativ zur Airbagabdeckung anders ausgerichtet ist als in Figur 6a und die Aufnahme relativ zur Airbagabdeckung an einem anderen Ort angeordnet ist.
Figur 8:
   Ausführungsbeispiel einer erfindungsgemäßen Vorrichtung mit einlaminiertem Projektil.
Figur 9a:
   Träger aus Figur 2 mit darin vorgesehener Heiz-/Kühleinrichtung und thermischer Isolierung.
Figur 9b:
   Aufnahme aus den Figuren 4 bis 7 mit darin vorgesehener Heiz-/Kühleinrichtung und thermischer Isolierung.
Figur 10:
   Ein weiteres Ausführungsbeispiel eines erfindungsgemäßen Verfahrens zur Untersuchung eines Öffnungsvorgangs einer Airbagabdeckung.
Figur 11 :
   Ein weiteres Ausführungsbeispiel der Erfindung, bei welcher die Kraftübertragung auf die Airbagabdeckung mittels eines Kolbens und eines Stößels erfolgt.
Figur 12:
   Ein weiteres Ausführungsbeispiel der Erfindung mit einem Kolben mit verformbarer Oberfläche.

In den genannten Figuren sind gleiche Elemente stets mit gleichen Bezugszeichen versehen.

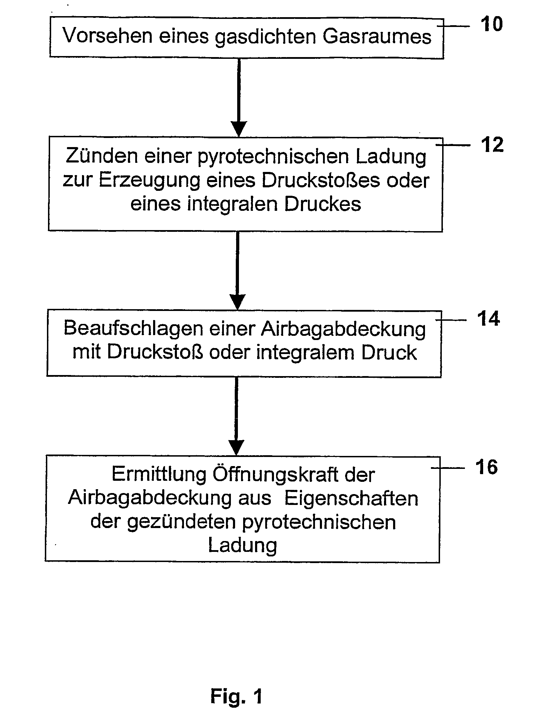

Figur 1 zeigt eine schematische Darstellung eines Ausführungsbeispiels des erfindungsgemäßen Verfahrens zur Untersuchung eines Öffnungsvorganges einer Airbagabdeckung. In einem ersten Verfahrensschritt 10 wird ein gasdichter Gasraum vorgesehen. In diesem Gasraum wird in einem nächsten Verfahrensschritt 12 ein sich in dem Gasraum ausbreitender Druckstoß und/oder ein sich in dem Gasraum aufbauender integraler Druck erzeugt. In einem nächsten Schritt 14 wird die Airbagabdeckung mit diesem erzeugten Druckstoß und/oder dem integralen Druck direkt oder indirekt und zumindest lokal beaufschlagt.

Auf diese Weise erfolgt eine Kraftübertragung auf die Airbagabdeckung, die bei entsprechender Erzeugung des Druckstoßes bzw. des integralen Druckes in zeitlichen Abläufen erfolgen kann, die denjenigen eines Airbagschusses entspricht. Das ist möglich durch Zünden einer pyrotechnischen Ladung, wie dies im Verfahrensschritt 12 vorgesehen ist.

Hierbei wird ein pyrotechnische Ladung bzw. eine Treibladung durch eine Zündvorrichtung ausgelöst. Diese erzeugt in dem gasdichten Gasraum ein definiertes Gasvolumen, welches mit der Leistung der pyrotechnischen Ladung korreliert ist. Wird eine pyrotechnische Ladung verwendet, deren erzeugtes Gasvolumen gerade ausreicht, um die Airbagabdeckung zu öffnen, kann aus der Leistung der pyrotechnischen Ladung die geleistete Arbeit und somit die für die Öffnung der Airbagabdeckung erforderliche Öffnungskraft berechnet werden. Dies sieht der Verfahrensschritt 16 des in der Figur 1 dargestellten Ausführungsbeispiels des erfindungsgemäßen Verfahrens vor, bei welchem die Öffnungskraft der Airbagabdeckung aus Eigenschaften der gezündeten pyrotechnischen Ladung, in diesem Fall insbesondere ihrer Leistung, bestimmt wird.

Figur 2 zeigt ein erstes Ausführungsbeispiel einer erfindungsgemäßen Vorrichtung zur Untersuchung eines Öffnungsvorgangs einer Airbagabdeckung. Die Airbagabdeckung ist hier in eine Schalttafel eines Kraftfahrzeuges integriert, welche eine dem Fahrgast zugewandte Außenschicht 18 und eine ihm abgewandte Innenschicht 19 aufweist. Dementsprechend besitzt die Airbagabdeckung eine dem Fahrgast zugewandte Vorderseite 22 sowie eine ihm abgewandte Rückseite 23.

Die Airbagabdeckung 22, 23 ist durch zumindest teilweise die Airbagabdeckung 22, 23 gleichsam einfassende Ausfräsungen 25a, 25b vom Rest der Schalttafel abgegrenzt. Diese Ausfräsungen 25a, 25b durchsetzen die Außenschicht 18 und die Innenschicht 19 der Schalttafel nur teilweise und bilden so Sollbruchstellen aus, an welchen die Airbagabdeckung bei einem Airbagschuss aus der Schalttafel gelöst wird.

Üblicherweise sind die Ausfräsungen 25a, 25b nicht umlaufend um die Airbagabdeckungen 22, 23 ausgeführt, sondern zwischen aufeinanderfolgenden Ausfräsungen sind Stege vorgesehen, die in ihrer Abmessung einerseits die Belastbarkeit, andererseits aber auch die Größe der erforderlichen Öffnungskraft beeinträchtigen.

In der Schnittdarstellung durch das Ausführungsbeispiel einer erfindungsgemäßen Vorrichtung in Figur 2 sind die Luftsackführungen 27a und 27b erkennbar, welche im Betrieb mit einem Airbagmodul sicherstellen, dass der Airbag sich nicht seitlich an der Airbagabdeckung 22, 23 vorbei entfaltet, sondern möglichst in Richtung der Rückseite der Airbagabdeckung 23. Dadurch, dass diese Luftsackführungen 27a, 27b vorgesehen sind, kann die Vorrichtung zum einen einfach für den Einsatz eines Airbagmoduls umgerüstet werden, zum anderen ergeben sich bei Untersuchungen ohne Verwendung eines Airbagmoduls möglichst realistische Einsatzbedingungen.

An den Luftsackführungen 27a, 27b stützt sich ferner eine Rückwand 33 ab. Damit zwischen der Rückwand 33 und den Luftsackführungen 27a, 27b kein Gas entweichen kann, sind zwischen den aneinander zur Anlage kommenden Abschnitten der Luftsackführungen 27a, 27b und der Rückwand 33 Dichtungsmittel 31a, 31b vorgesehen. Als Dichtungsmittel 31a, 31b kommen an sich bekannte Mittel wie Gummidichtungen, Kupferscheiben oder weitere gasdichte Materialien in Frage.

Die Rückwand 33 ist mittels Befestigungseinrichtungen 20a, 20b mit der Innenschicht der Schalttafel 19 verbunden. Als Befestigungseinrichtung kommen dabei unter anderem Schraubverbindungen oder aufgeschmolzene Kunststoffverbindungen in Betracht.

Die Rückwand 33, die Rückseite der Airbagabdeckung 23 sowie die Luftsackführungen 27a, 27b in Verbindung mit den Befestigungseinrichtungen 20a, 20b bilden auf diese Art einen gasdichten Gasraum 29 aus. In diesem ist eine Einrichtung zur Erzeugung eines sich in dem Gasraum 29 ausbreitenden Druckstoβes oder eines sich in dem Gasraum 29 aufbauenden integralen Druckes vorgesehen. Im vorliegenden Ausführungsbeispiel der Figur 2 ist diese vorteilhafterweise als zündbare pyrotechnische Ladung mit Zündvorrichtung 35 ausgeführt. Die Zündvorrichtung kann dabei von jedweder an sich bekannten Art sein, insbesondere eine fernsteuerbare Zündvorrichtung mit Funkempfänger oder eine elektrisch über Kabel ansteuerbare Zündvorrichtung. Im letzteren Falle wäre eine elektrische Verbindung zur Zündvorrichtung vorzusehen, was im dargestellten Ausführungsbeispiel nicht der Fall ist. Hier handelt es sich um eine mittels Fernzünder zündbare Zündvorrichtung zusammen mit pyrotechnischer Ladung 35.

Als pyrotechnische Ladung können prinzipiell alle Sprengstoffe oder Sprengmittel vorgesehen sein, die dazu geeignet sind, einen Druckstoß und/oder einen integralen Druck derart zu erzeugen, dass die durch ihre Explosion entstehende Öffnungskraft in Zeitabläufen auf die Airbagabdeckung 22, 23 übertragen wird, die den Zeitabläufen bei einem Airbagschuss entsprechen. Insbesondere können pyrotechnische Ladungen vorgesehen sein, welche nach der Zündung eine beschleunigte Verbrennung erfahren, so dass sich ein Druckstoß ausbildet.

Daneben bildet sich ein integraler Druck aus, welcher auch bei einer nicht beschleunigten Verbrennung ausgebildet wird. Dieser geht üblicherweise mit einer Schwadenbildung einher und erzeugt in dem gasdichten Gasraum 29 einen Druck, welcher eine Öffnungskraft auf die Rückseite der Airbagabdeckung 23 ausübt. Die Größe der auf die Airbagabdeckung 22, 23 übertragene Öffnungskraft ist, wie oben beispielhaft beschrieben, aus Parametern der pyrotechnischen Ladung berechenbar.

Durch Versuchsreihen mit pyrotechnischen Ladungen verschiedenen Energiegehaltes kann somit die kleinste erforderliche Öffnungskraft ermittelt werden, bei welcher die Airbagabdeckung 22, 23 ordnungsgemäß öffnet.

In der Darstellung in Figur 2 ist weiterhin ein Träger 37 erkennbar, welcher mit einer Ausnehmung versehen ist, in welcher die pyrotechnische Ladung samt Zündvorrichtung 35 angeordnet ist. Dieser Träger 37 stellt eine vorteilhafte Weiterbildung der Erfindung dar, da er die Positionierung bzw. das Einbringen der pyrotechnischen Ladung in den Gasraum 29 erleichtert. Alternativ hierzu kann die pyrotechnische Ladung mit Zündvorrichtung 35 auch direkt auf der dem Gasraum 29 zugewandten Seite der Rückwand 33 angeordnet sein und auf einen Träger 37 gänzlich verzichtet werden.

Selbst diese Anordnung der pyrotechnischen Ladung mit Zündvorrichtung 35 stellt jedoch noch eine vorteilhafte Ausgestaltungsvariante dar, da sich hierdurch eine möglichst homogene Kraftübertragung auf die Rückseite der Airbagabdeckung 23 realisieren lässt. Prinzipiell kann die pyrotechnische Ladung mit Zündvorrichtung 35 jedoch an beliebiger Stelle im Gasraum 29 angeordnet werden.

Figur 3a zeigt ein Ausführungsbeispiel einer Vorrichtung, bei welcher auf das Vorsehen einer pyrotechnischen Ladung mit Zündvorrichtung 35 verzichtet wird und stattdessen eine Zuführöffnung 39 in der Rückwand 33 und somit in einer Wandung des Gasraumes 29 vorgesehen ist. Wie der eine Gaszufuhr repräsentierende Pfeil 41 illustriert, kann über diese Zuführöffnung, ein Gas oder ein Gasgemisch zugeführt werden, was einen integralen Druck in dem Gasraum 29 erzeugt.

Durch die Zuführung 41 des Gases bzw. Gasgemisches wird ein integraler Druck in dem Gasraum 29 erzeugt und die mit ihm einhergehende Kraft auf die Rückseite der Airbagabdeckung 23 übertragen. Ist diese Kraft, mit welcher die Airbagabdeckung 22, 23 beaufschlagt wird ausreichend groß, so reißt die durch die Ausfräsungen 25a, 25b gebildete Sollbruchstelle ein und die Airbagabdeckung 22, 23 öffnet, so dass deren Öffnungsvorgang untersucht werden kann.

Der Kraftstoß, mit welchem das erzeugte Gas bzw. Gasgemisch auf die Airbagabdeckung 22, 23 einwirkt, ist aus der Thermodynamik des verwendeten Gases bzw. Gasgemisches berechenbar. Damit sich die Materialien der Airbagabdeckung 22, 23 bzw. der Schalttafel 16, 19 ähnlich verhalten wie bei einem Airbagachuss, ist wiederum sicherzustellen, dass die zeitlichen Abläufe der Kraftübertragung auf die Rückseite der Airbagabdeckung 23 im Falle des Erzeugens und Aufbaus des integralen Druckes die gleichen sind wie im Falle der Kraftübertragung bei einem Airbagschues. Dies kann durch das vorsehen von geeigneten Druckbehältern, Ventilen und Austrittsöffnungen für das zuzuführende Gas bzw. Gasgemisch gewährleistet werden.

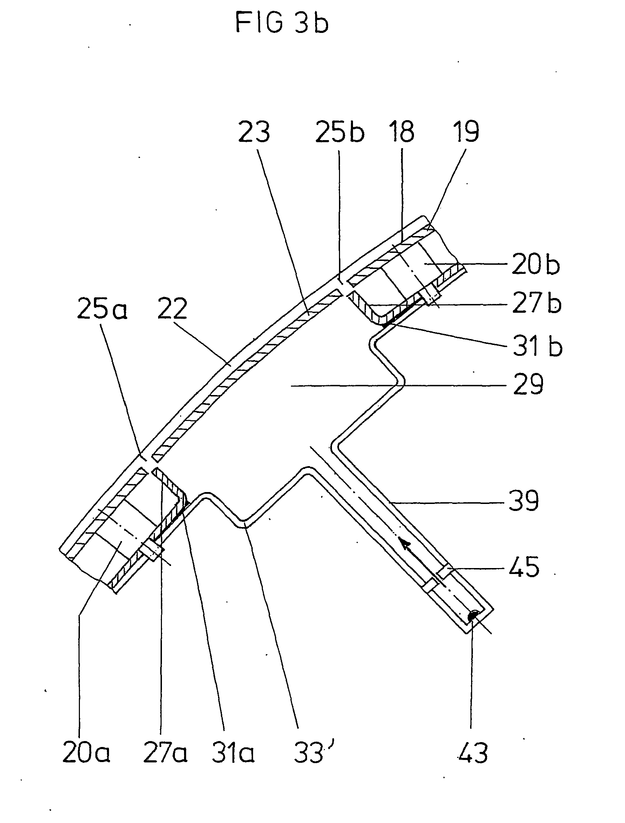

Daneben wird in einer vorteilhaften Ausführungsform der integrale Druck mit zeitlichen Abläufen der Kraftübertragung wie bei einem Airbagschus9 dadurch erzeugt, dass entsprechend der Darstellung in Figur 3b in der Zuführöffnung 39 oder angrenzend an diese eine pyrotechnische Ladung mit Zündvorrichtung 43 angeordnet ist. Dabei ist die pyrotechnische Ladung mit Zündvorrichtung 43 durch eine Blende 45 mit veränderbarer Öffnung oder eine austauschbare Blende 45 von dem näher an der Airbagabdeckung liegenden Teil der Zuführöffnung 39 bzw. der Zuführöffnung 39 an sich abgetrennt. Die Öffnung der Blende 45 ist für das bei der Zündung der pyrotechnischen Ladung entstehende Gasgemisch durchströmbar. Die Öffnungsgröße der Blende 45 nimmt dabei Einfluss auf die durch das Gasgemisch auf die Airbagabdeckung 22, 23 übertragene Leistung und gestattet durch ihre Veränderung eine einfache Modifikation dieses Parameters.

Dabei ist es von Vorteil, dass der Gasraum 29 in demAusführungsbeispielt der Figur3b, wie auch im Falle des Ausführungsbeispiels aus Figur 2, teilweise durch die Rückseite der Airbagabdeckung 23 begrenzt ist, da hierdurch der integrale Druck direkt auf die Airbagabdeckung 22, 23 übertragen werden kann, was eine vorteilhafte Ausgestaltung des erfindungsgemäßen Verfahrens sowie der-erfindungsgemaßen Vorrichtung darstellt.

Bei einem Airbagschuss wird die Airbagabdeckung lokal auf einer begrenzten Fläche mit einer Öffnungskraft beaufschlagt, da der Luftsack des Airbagmoduls sich zum Zeitpunkt seines Auftreffens auf der Rückseite der Airbagabdeckung 23 noch sehr wenig entfaltet hat. In einer Weiterbildung des erfindungsgemäßen Verfahrens wird daher der Druckstoß oder integrale Druck indirekt mittels wenigstens eines Projektils 56a auf die Airbagabdeckung 22, 23 übertragen, so dass eine lokale Beaufschlagung mit einer Kraft bzw. Öffnungskraft erfolgt, wodurch das Öffnungsverhalten der Airbagabdeckung 22, 23 bei einem Airbagschuss realistischer nachgestellt wird.

Den Ablauf dieses Verfahrens verdeutlicht die Darstellung in Figur 4, welche gleichzeitig ein drittes Ausführungsbeispiel der erfindungsgemäßen Vorrichtung darstellt. Hierin ist ein Projektil 56a vorgesehen, welches teilweise einen gasdichten Gasraum 50 begrenzt und unter Krafteinwirkung von anderen Begrenzungsflächen des Gasraumes 50, welche im Ausführungsbeispiel der Figur 4 vorteilhafterweise durch eine Aufnahme 54 realisiert sind, abtrennbar ist.

Im Inneren des gasdichten Raumes 50 ist im vorliegenden Fall wiederum eine pyrotechnische Ladung samt Zündvorrichtung 52 vorgesehen. Bei Zünden der pyrotechnischen Ladung wird erfindungsgemäß ein sich im Gasraum 50 ausbreitender Druckstoß und/oder sich in dem Gasraum 50 aufbauender integraler Druck erzeugt, welcher eine Krafteinwirkung auf das Projektil 56a bewirkt, infolge derer dieses bei ausreichend großer Krafteinwirkung von der Aufnahme 54, welche eine weitere Begrenzungsfläche des Gasraumes 50 darstellt, abgetrennt wird und sich auf die Rückseite der Airbagabdeckung 23 zu bewegt. Beim Auftreffen des Projektils 56a auf der Rückseite der Airbagabdeckung 23 wird sodann der im Gasraum 50 erzeugte Druckstoß und/oder der integrale Druck indirekt mittels des Projektils 56a auf die Airbagabdeckung 22, 23 entsprechend der oben beschriebenen Weiterbildung des erfindungsgemäßen Verfahrens übertragen.

Hierbei ist es von Vorteil, dass in einer vorteilhaften Ausgestaltungsvariante der erfindungsgemäßen Vorrichtung, wie in Figur 4 dargestellt, das Projektil 56a zwischen der Einrichtung zur Erzeugung des Druckstoßes und/oder des integralen Druckes, welche hier in Form der pyrotechnischen Ladung mit Zündvorrichtung 52 realisiert ist, und der Rückseite der Airbagabdeckung 23 angeordnet ist, so dass das Projektil 56a durch den Druckstoß und/oder den integralen Druck in Richtung auf die Airbagabdeckung 22, 23 zu beschleunigt werden kann.

Es hat sich gezeigt, dass die derzeit am Markt verfügbaren Airbagmodule im Hinblick auf den Auftreffpunkt des Luftsackes auf der Rückseite der Airbagabdeckung 23 eine gewisse Streuung aufweisen, so dass die Airbagabdeckung 22, 23 bei einem Airbagschuss an verschiedenen Stellen der Rückseite der Airbagabdeckung 23 über den Luftsack mit einer Kraft bzw. einer Öffnungskraft beaufschlagt wird. In der Regel zeigt die Airbagabdeckung 22, 23 jedoch je nach dem, an welcher Stelle sie mit einer Kraft bzw. Öffnungskraft beaufschlagt wird, ein anderes Öffnungsverhalten. Aus diesem Grund wäre es wünschenswert, ein Verfahren sowie eine Vorrichtung zur Verfügung zu haben, mit welcher das Öffnungsverhalten einer Airbagabdeckung in Abhängigkeit vom Ort der Krafteinwirkung auf die Airbagabdeckung untersucht werden kann.

Eine Weiterbildung des erfindungsgemäßen Verfahrens sieht daher vor, dass der Ort der Krafteinwirkung auf die Airbagabdeckung 22, 23 durch die anfängliche Ausrichtung und Anordnung des wenigstens einen Projektils relativ zur Airbagabdeckung beeinflusst wird. Den Ablauf dieses Verfahrensschrittes verdeutlichen die Darstellungen in den Figuren 4 und 5, in welchen eine Weiterbildung der erfindungsgemäßen Vorrichtung dargestellt ist, nach welcher die Einrichtung zur Erzeugung eines Druckstoßes und/oder eines integralen Druckes in Form der pyrotechnischen Ladung mit Zündvorrichtung 52 sowie das wenigstens eine Projektil 56a an verschiedenen Orten relativ zur Airbagabdeckung 22, 23 anordnbar sind.

Diese Anordnbarkeit an verschiedenen Orten wird in den Figuren 4 und 5, wobei letztere eine Aufsicht auf die Rückwand mit darin angeordneter Aufnahme 54 samt pyrotechnischer Ladung darstellt, durch die Pfeile 59a, 59b, 59c und 59d verdeutlicht, welche die Veränderung der Position der Aufnahme 54 sowie der darin befindlichen pyrotechnischen Ladung samt Zündvorrichtung 52 und des auf der Aufnahme 54 vorgesehenen Projektils 56a andeuten. In Figur 5 wurde dabei der Deutlichkeit halber auf die Darstellung des Projektils 56a verzichtet.

Durch die beschriebene Anordnung des Projektils 56a an verschiedenen Orten relativ zur Airbagabdeckung 22, 23 kann offensichtlich der Auftreffort des Projektils 56a auf der Rückseite der Airbagabdeckung 23 variiert werden. Die Arretierung der Aufnahme 54 an dem gewählten Ort kann dabei prinzipiell auf jede an sich bekannte Art erfolgen, insbesondere durch Verschraubung, Verklebung, Abstandshalter oder ähnliches, vorzugsweise durch Verschraubung. Überdies ist in einer vorteilhaften Ausgestaltungsvariante wenigstens eine Kraftmesseinrichtung, insbesondere eine Kraftmessdose, zur Messung von Rückstoßkräften an der Aufnahme vorgesehen.

In Figur 4 sind in Analogie zu dem ersten Ausführungsbeispiel aus Figur 3a Dichtmittel 31a, 31b zwischen den Luftsackführungen 27a, 27b und der Rückwand 33 vorgesehen. Im Ausführungsbeispiel der Figur 4 ist dies jedoch nicht zwingend erforderlich, da hier der Gasraum 50 durch das Projektil 56a und die Aufnahme 54 gebildet wird. Der Hohlraum 58 hingegen braucht nicht zwangsläufig gasdicht ausgeführt zu sein. Die vorliegende Ausgestaltungsvariante mit Dichtmitteln 31a, 31b bringt jedoch den Vorteil mit sich, dass derselbe Grundaufbau der Vorrichtung flexibel für Untersuchungen mit und ohne Projektil verwendet werden kann.

Alternativ oder ergänzend zur Variation des Ortes der Krafteinwirkung auf die Airbagabdeckung sieht eine Weiterbildung des erfindungsgemäßen Verfahrens vor, dass der Ort der Krafteinwirkung auf die Airbagabdeckung alternativ oder ergänzend durch die geometrische Gestalt des verwendeten wenigstens einem Projektils beeinflusst wird. Hierdurch ergeben sich noch größere Variationsmöglichkeiten. Zudem kann die Fläche, über welche die Krafteinwirkung erfolgt, einfach variiert werden.

Die Vorteile dieses Verfahrens werden anhand der Figur 6a deutlich, welche eine Schnittdarstellung durch eine Weiterbildung der erfindungsgemäßen Vorrichtung zeigt. Im Unterschied zur Figur 4 ist hierin ein Projektil 56b vorgesehen, welches eine Ausformung 57 in Richtung der Rückseite der Airbagabdeckung 23 aufweist und zusammen mit der Aufnahme 54 den Gasraum 50 ausbildet.

Bei Zündung der pyrotechnischen Ladung samt Zündvorrichtung 52, welche im vorliegenden Ausführungsbeispiel im Gasraum 50 angeordnet ist, wird das Projektil wiederum in Richtung der Rückseite der Airbagabdeckung beschleunigt und trifft dort zuerst mit seiner Ausformung 57 auf, wodurch die Krafteinwirkung lokalisiert im Auftreffbereich der Ausformung 57 stattfindet. Eine Variation des Ortes der Krafteinwirkung ist leicht dadurch realisierbar, dass Projektile 56b mit anderer geometrischer Gestalt, insbesondere einer anders gestalteten Ausformung 57 verwendet werden.

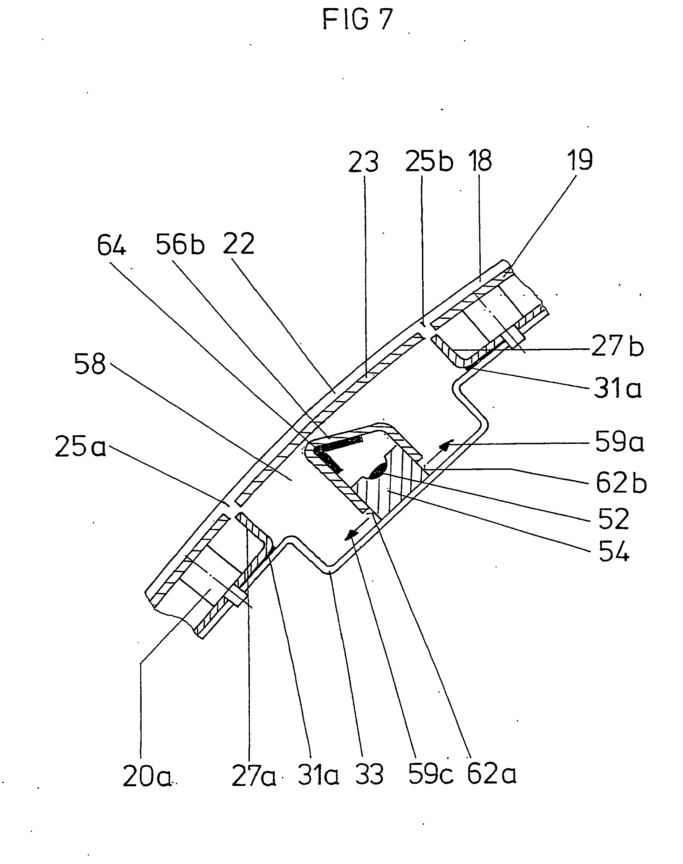

Überdies ist in einer vorteilhaften Ausgestaltungsvariante der erfindungsgemäßen Vorrichtung die Ausrichtung des wenigstens einen Projektils relativ zur Airbagabdeckung variabel ausgeführt. Im Ausführungsbeispiel der Figur 6a kann so beispielsweise das Projektil 56b auf der Aufnahme 54 um 180° gedreht werden, so dass die Ausformung 57, wie in Fig. 7 dargestellt, auf der entgegengesetzten Seite zum Liegen kommt. Dementsprechend befindet sich auch der Ort der Krafteinwirkung auf die Rückseite der Airbagabdeckung 23 auf der anderen Seite der Aufnahme 54. Zu diesem Zweck ist die Aufnahme 54, wie in Fig. 5 schematisch dargestellt, bevorzugt mit einem quadratischen Querschnitt ausgestaltet. Auf diese Weise kann die Ausrichtung des Projektils definiert in 90°-Schritten geändert werden, wobei selbstverständlich jeder beliebige Querschnitt realisierbar ist, insbesondere auch ein sternförmiger, welcher noch weitere Ausrichtungsmöglichkeiten zur Verfügung stellt, oder ein zylinderförmiger, der eine stufenlose Ausrichtung ermöglicht.

Beim Auslösen eines Airbagmoduls im Einsatzfall verbreitert sich die Kontaktfläche zwischen dem sich füllenden Luftsack und der Rückseite der Airbagabdeckung beim Auftreffen des Luftsackes auf dieselbe. Demzufolge vergrößert sich die Fläche, über welche die Kraft bzw. die Öffnungskraft auf die Airbagabdeckung einwirkt. Um diesen Vorgang nachzubilden, sieht eine Weiterbildung des erfindungsgemäßen Verfahrens vor, dass das wenigstens eine Projektil beim Auftreffen auf die Airbagabdeckung zumindest teilweise verformt wird.

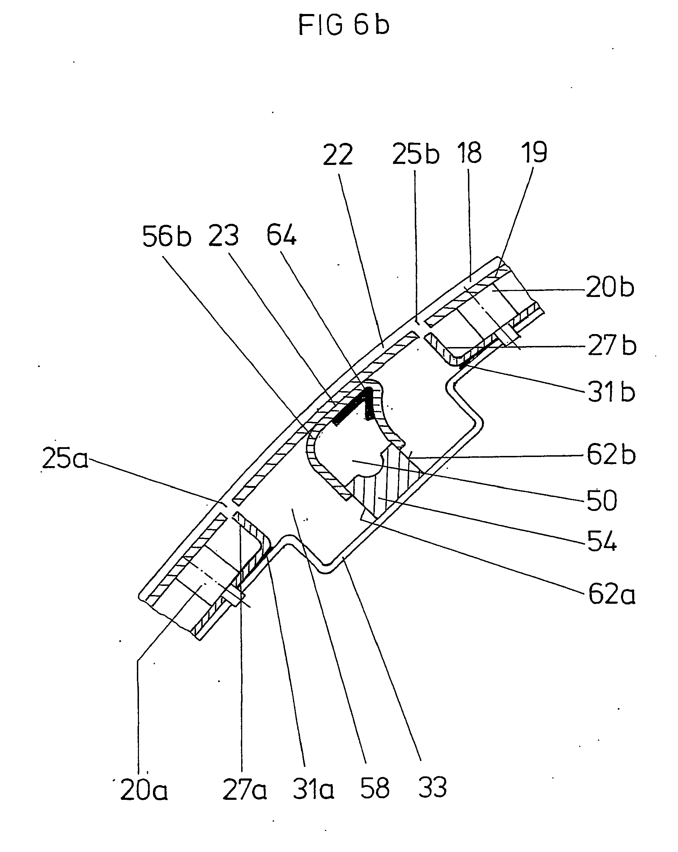

Den Ablauf dieser Verformung illustrieren die Figuren 6a und 6b, wobei die Figur 6a eine erfindungsgemäße Vorrichtung, bei welcher das Projektil 56b vorteilhafterweise unter Krafteinwirkung zumindest teilweise verformbar ausgeführt ist, und Figur 6b eine Momentaufnahme der Vorrichtung aus Figur 6a nach Zünden der pyrotechnischen Ladung 52 und kurz nach Auftreffen des Projektils 56b auf die Rückseite der Abdeckung 23 darstellen. Hierbei wurde noch keine hinreichende Öffnungskraft auf die Airbagabdeckung 22, 23 übertragen, so dass diese sich noch im geschlossenen Zustand befindet.

Wie in Figur 6b deutlich erkennbar ist, wird das Projektil 56b beim Auftreffen auf die Rückseite der Airbagabdeckung 23 verformt, so dass sich verglichen mit der geometrischen Gestalt der ursprünglich vorhandenen und in Figur 6a erkennbaren Ausformung 57 eine vergrößerte Kontaktfläche zwischen dem Projektil 56b und der Rückseite der Airbagabdeckung 23 einstellt, über welche die Krafteinwirkung bewerkstelligt wird. Auf diese Weise wird der Auftreffvorgang des Luftsackes eines Airbagmoduls auf die Rückseite der Airbagabdeckung realistisch nachgebildet.

Je nach Form und Ausrichtung der sich im Gasraum 50 ausbreitenden Druckstöße und/oder integralen Drücke kann das beschleunigte Projektil an einem etwas anderem Ort auf der Rückseite der Airbagabdeckung auftreffen. Um diese Ungenauigkeiten zu umgehen, sieht eine Weiterbildung des erfindungsgemäßen Verfahrens vor, dass das wenigstens eine Projektil zumindest bis zum Zeitpunkt des Auftreffens auf der Airbagabdeckung geführt wird, vorzugsweise jedoch auch über diesen Zeitpunkt hinaus, so dass eine Ablenkung des Projektils beim Auftreffen vermieden wird. Hierdurch kann der Ort der Krafteinwirkung auf die Airbagabdeckung noch präziser vorherbestimmt werden.

Der Ablauf dieses Führens wird in Figuren 6a und 6b verdeutlicht, in welchen eine vorteilhafte Ausgestaltungsvarianten der erfindungsgemäßen Vorrichtung dargestellt ist, welche Führungsflächen 62a, 62b aufweist. Eine besonders stabile Führung ergibt sich, wenn sich die Führungsflächen 62a, 62b umfänglich um die gesamte Aufnahme 54 erstrecken. An diesen Führungsflächen 62a, 62b stützt sich das Projektil 56b während seiner Bewegung auf die Rückseite der Airbagabdeckung 23 zu ab, so dass es präzise am vorherbestimmten Ort auftrifft. Die Dauer der Führung ist dabei einfach durch die Ausdehnung der Führungsflächen 62a und 62b in Richtung auf die Rückseite der Airbagabdeckung 23 zu in Verbindung mit der Größe der sich an der Aufnahme 54 abstützenden Fläche des Projektils 56b variierbar.

In einer vorteilhaften Ausgestaltungsvariante der erfindungsgemäßen Vorrichtung, bei welcher eine Aufnahme vorgesehen ist, welche zusammen mit dem wenigstens einen Projektil den gasdichten Gasraum ausbildet, weist die Aufnahme vorzugsweise, wie bereits oben erwähnt, einen quadratischen Querschnitt auf, wie dies in Fig. 5, welche eine Aufsicht auf die Aufnahme 54 aus Fig. 4 zeigt, schematisch dargestellt ist. Bei abschnittsweiser Gestaltung des Projektils 56b als Vierkantrohr mit entsprechendem Querschnitt kann so die Außenwandung der Aufnahme 54 als Führungsfläche 62a, 62b für das Projektil 56b beziehungsweise für die Innenwandung des Vierkantrohr-Abschnittes des Projektils dienen. Daneben sind selbstverständlich weitere Querschnittsformen denkbar, u. a. eine zylinderförmige Außenwandung, wobei das Projektil jeweils in seiner Form entsprechend anzupassen ist. Dabei können auch nur Teile der Außenwandung der Aufnahme als Führungsflächen dienen.

In einer Weiterbildung der erfindungsgemäßen Vorrichtung ist das wenigstens eine Projektil 56a derart ausgestaltet, dass es teilweise über die Außenwandung der Aufnahme 54 stülpbar ist, wobei die überstülpte Fläche der Außenwandung in der beschriebenen Weise als wenigstens abschnittsweise Führung für das wenigstens eine Projektil ausgebildet ist. Dabei ist die Öffnung des zu überstülpenden Teils des Projektils 56a vorzugsweise kleiner ausgeführt als der Durchmesser der Aufnahme 54, so dass durch das Überstülpen des Projektils 56a über die Aufnahme der gasdichte Gasraum 50 ausgebildet wird.

In einer anderen vorteilhaften Ausgestaltungsvariante der erfindungsgemäßen Vorrichtung ist das wenigstens eine Projektil 56b auf die Aufnahme 54 auflaminiert, so dass wiederum durch das Projektil 54b und die Aufnahme 54, wie in Figur 6a dargestellt, der gasdichte Gasraum 50 ausgebildet wird.

Daneben sind selbstverständlich weitere Möglichkeiten der Ausbildung des Gasraumes 50 durch das Projektil 56b und die Aufnahme 54 denkbar. So ist beispielsweise das Projektil 56b abgeformt, indem es in einer Formaufnahme ablaminiert wurde, und zur Ausbildung des Gasraumes 50 auf die Aufnahme 54 aufgesetzt.

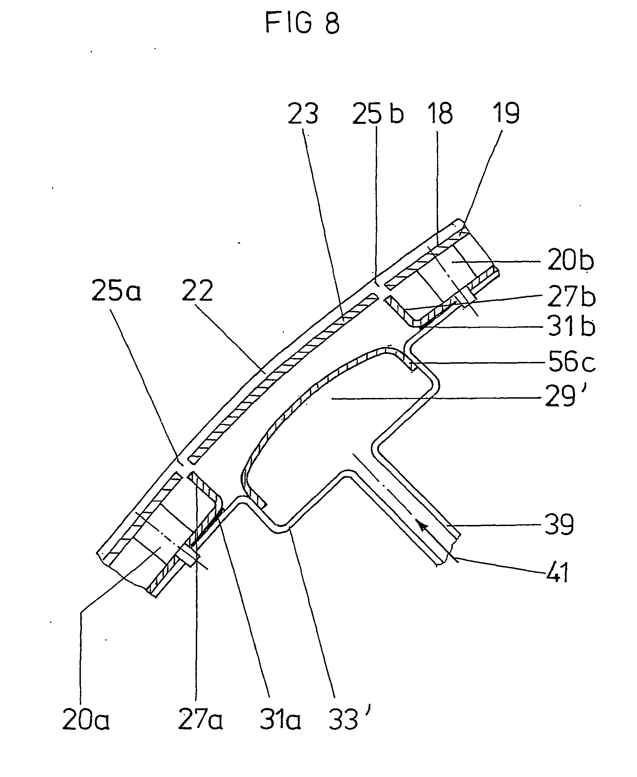

Darüber hinaus besteht in einer anderen Ausgestaltungsvariante die Möglichkeit, das Projektil in eine Aufnahme einzuformen und auf diese Weise den gasdichten Gasraum auszubilden. Dies illustriert beispielhaft Figur 8, in welcher die Innenwandung der Rückwand 33' gleichsam als Aufnahme dient, in welche ein Projektil 56c einlaminiert ist. Auf diese Weise ist der gasdichte Gasraum 29' ausgebildet.

Ist bei der erfindungsgemäßen Vorrichtung wenigstens ein zumindest teilweise verformbares Projektil vorgesehen, so ist dies vorzugsweise aus Kevlar® gefertigt.

Zur Beeinträchtigung der Art der Verformung des Projektils 56b bzw. dessen Ausformung 57 beim Auftreffen des Projektils 56b auf die Rückseite der Abdeckung 23 (vgl. Figur 6b), sieht eine vorteilhafte Weiterbildung der erfindungsgemäßen Vorrichtung vor, dass das Projektil 56b mit einer Verstärkung versehen ist, welche insbesondere durch eine Metalleinlage oder eine Einlage 64 aus einem Metallverbundstoff gebildet ist. Diese Einlage 64 ist bevorzugt auf der der Airbagabdeckung 22, 23 abgewandten Seite des wenigstens einem Projektils 56b angeordnet. Durch die Geometrie und den Ort der Anordnung an bzw. in dem Projektil 56b kann so die Verformung des Projektils 56b und damit der Ort bzw. die Größe der Fläche, auf welche die Kraft bzw. Öffnungskraft einwirkt, beeinträchtigt werden.

Eine Weiterbildung des erfindungsgemäßen Verfahrens sieht vor, dass die pyrotechnische Ladung zumindest zeitweise auf einer definierten Temperatur gehalten wird, insbesondere auf einer Temperatur von -35°C oder +85°C. Hierdurch kann ein gleichbleibender Abbrand der pyrotechnischen Ladung erreicht werden, was wiederum zu gleichmäßigeren Druckstößen und einem gleichmäßigeren Aufbau integraler Drücke im Gasraum führt.

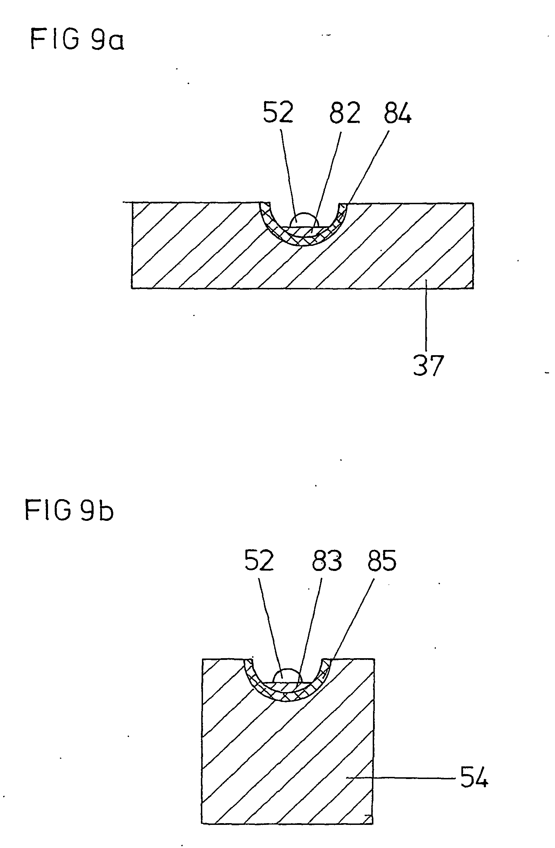

Figur 9 gibt schematisch eine Ausführungsvariante eines erfindungsgemäßen Verfahrens wieder, in welcher ein entsprechender Verfahrensschritt 87 vorgesehen ist.

Ferner sieht eine vorteilhafte Weiterbildung der erfindungsgemäßen Vorrichtung eine Heiz- und/oder Kühleinrichtung für die pyrotechnische Ladung vor, welche vorzugsweise zumindest teilweise von der Umgebung thermisch entkoppelt ist. Hierdurch kann die pyrotechnische Ladung auf einer definierten Temperatur gehalten werden, was, wie oben beschrieben, einen gleichbleibenden Abbrand mit den genannten Vorteilen ermöglicht.

Die Figuren 9a und 9b zeigen Ausgestaltungsvarianten für derartige Heiz- und/oder Kühleinrichtungen sowie thermische Entkopplungen. So ist in Figur 9a in dem Träger 37 aus Figur 2 eine thermische Isolierung 84 vorgesehen, welche beispielsweise durch einen evakuierten Bereich gebildet sein kann, aber auch in Form von Isolationsfolien oder ähnlichem ausgeführt sein kann. Ferner ist eine Heiz-Kühleinrichtung 82 vorgesehen, auf welcher die pyrotechnische Ladung mit Zündvorrichtung angeordnet ist. Die Heiz-/Kühleinrichtung kann beispielsweise durch Peltier-Elemente gebildet sein, daneben sind aber auch andere Heiz- oder Kühltechniken einsetzbar. Auf die Darstellung elektrischer und/oder anderweitiger Zuleitungen zu der Heiz-/Kühleinrichtung B2 wurde aus Gründen der Übersichtlichkeit verzichtet.

Die Figur 9b zeigt eine Ausgestaltungsvariante der erfindungsgemäßen Vorrichtung, bei welcher wiederum eine thermische Isolierung 85 vorgesehen ist, die in Analogie zu Figur 9a beispielsweise durch einen evakuierten Raum gebildet sein kann. Weiterhin ist ebenfalls eine Heiz-/Kithleinrichtung 83 dargestellt, mit welcher die pyrotechnische Ladung samt Zündvorrichtung 52 zumindest zeitweise auf einer definierten Temperatur gehalten werden kann. Als Heiz-/Kühleinrichtung kommen auch hier wiederum Peltierelemente in Frage, wobei auf eine Darstellung der elektrischen Zuleitungen der Übersichtlichkeit halber auch hier verzichtet wurde.

Im zusammenhang mit der Verwendung von an sich bekannten Treibmitteln oder Treibsätzen als pyrotechnische Ladung hat sich das Halten derselben auf einer Temperatur von -35°C bzw. +85°,C zumindest unmittelbar vor der Zündung der pyrotechnischen Ladung bewährt, so dass bei Verwendung dieser pyrotechnischen Ladungen bevorzugt Heiz-/Kühleinrichtungen, gegebenenfalls in Verbindung mit einer thermischen Isolierung, vorgesehen sind, mit welchen sich die genannten Temperaturen bzw. die entsprechende Temperierung der pyrotechnischen Ladung realisieren lassen.

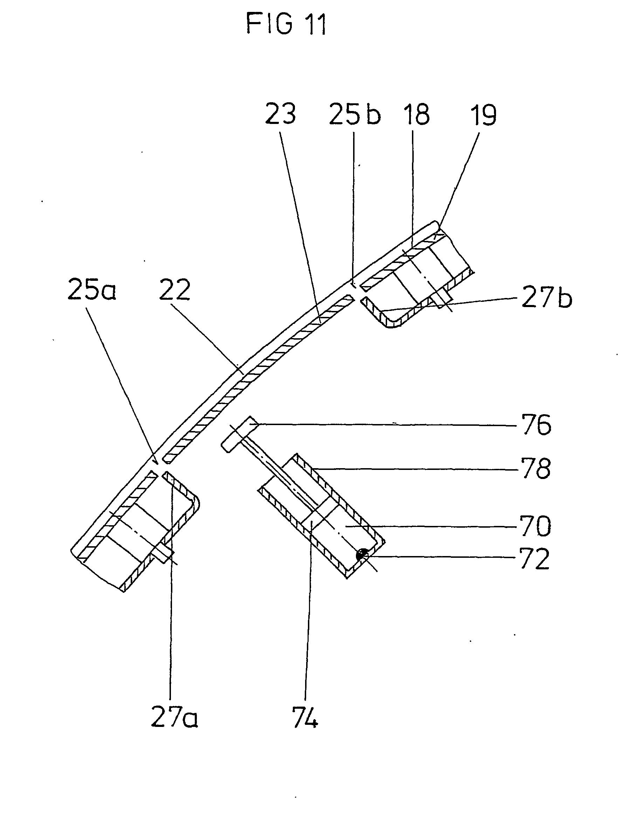

Figur 11 zeigt ein weiteres Ausführungsbeispiel einer erfindungsgemäßen Vorrichtung, in welcher ein gasdichter Gasraum 70 aus einem Zylinder 78 und einem darin beweglich angeordneten Kolben 74 gebildet wird. In dem Gasraum 70 ist wiederum eine Einrichtung zur Erzeugung eines sich in dem Gasraum 70 ausbreitenden Druckstoßes und/oder eines sich in dem Gasraum 70 aufbauenden integralen Druckes vorgesehen, welche im Fall des Ausführungsbeispieles aus Figur 11 erneut durch eine pyrotechnische Ladung mit Zündvorrichtung 72 realisiert ist.

Der Kolben 74 ist mit einem außerhalb des Zylinders 78 liegenden Stößel 76 verbunden, so dass Bewegungen des Kolbens 74 unmittelbar mit Bewegungen des Stößels 76 einhergehen. Wird die pyrotechnische Ladung samt Zündvorrichtung 72 im Inneren des Gasraumes 70 gezündet, so erfolgt über den sich ausbreitenden Druckstoß und/oder den sich im Gasraum 70 aufbauenden integralen Druck eine Kraftübertragung auf den Kolben 74, welche diesen und somit den Stößel 76 in Bewegung versetzt.

Indem nun der Stößel, wie in Figur 11 dargestellt, vor Zünden der pyrotechnischen Ladung 72 in unmittelbarer Nähe der Rückseite der Airbagabdeckung 23 positioniert wird, kann nach Zünden der pyrotechnischen Ladung samt Zündvorrichtung 72 eine Kraftübertragung vom Stößel 76 auf die Rückseite der Airbagabdeckung 23 erfolgen.

Die Größe der Fläche, über welche die Krafteinwirkung auf die Rückseite der Airbagabdeckung 23 erfolgt, ist dabei einfach über die Größe der Fläche des Stößels 76, welche mit der Rückseite der Airbagabdeckung 23 in Kontakt gebracht wird, variierbar. Überdies kann der Ort der Krafteinwirkung sehr einfach dadurch verändert werden, dass der Stößel 76 bzw. die gesamte aus Gasraum 70, Kolben 74, Zylinder 78 und Stößel 76 bestehende Einheit hinter einem anderen Punkt der Airbagabdeckung 22, 23 angeordnet wird.

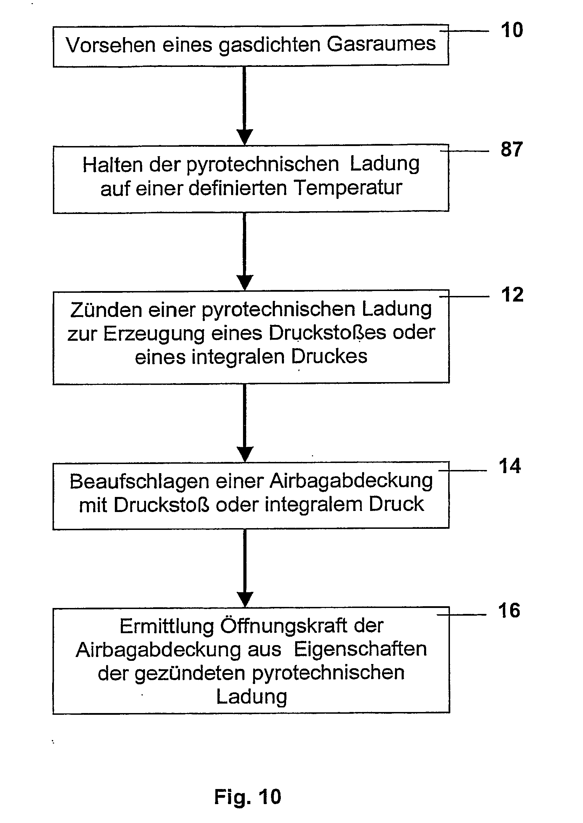

Nachteilig bei der Ausführungsvariante der Figur 10 ist jedoch, dass bei Einsatz einer pyrotechnischen Ladung Verbrennungsrückstände zwischen die Innenwandung des Zylinders und den Kolben gelangen können, was zu einer erhöhten Reibung, Verfälschung der Ergebnisse und erhöhtem Verschleiß führt.

Die beschriebenen erfindungsgemäßen Verfahren und deren Weiterbildung zur Untersuchung des Öffnungsverhaltens einer Airbagabdeckung werden unter anderem zur Bestimmung der für eine ordnungsgemäße Öffnung der Airbagabdeckung erforderlichen Öffnungskraft verwendet. Die Ermittlung der genannten Öffnungskraft kann hierbei insbesondere in der oben beschriebenen Weise aus der Leistung der verwendeten pyrotechnischen Ladung berechnet werden. Im Besonderen erfolgt die Berechnung in Abhängigkeit vom Ort der Beaufschlagung der Airbagabdeckung mit der Öffnungskraft.

Ferner werden die beschriebenen Vorrichtungen sowie deren vorteilhafte Weiterbildungen verwendet, um die für eine ordnungsgemäße Öffnung einer Airbagabdeckung erforderliche Öffnungskraft zu bestimmen, insbesondere in Abhängigkeit von dem Ort der Beaufschlagung der Airbagabdeckung mit der Öffnungskraft. Die Berechnung der erforderlichen Öffnungskraft kann auch hier beispielsweise aus der Leistung einer verwendeten pyrotechnischen Ladung erfolgen.

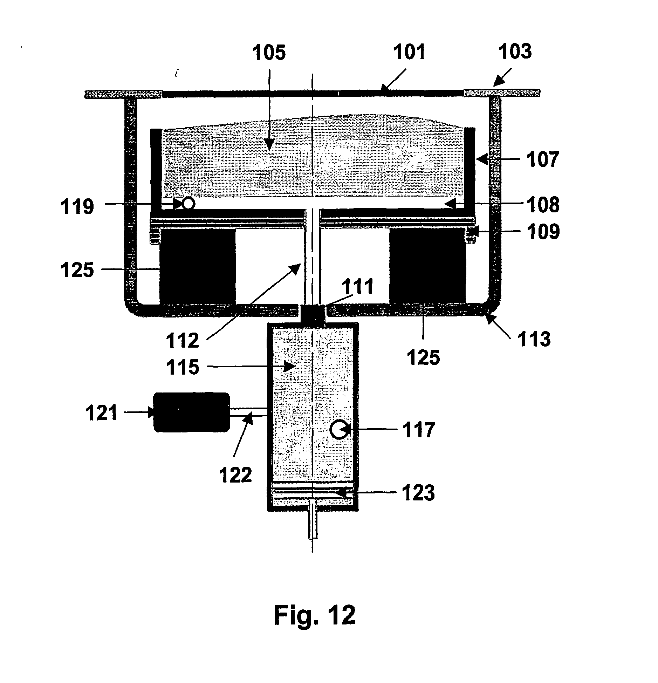

Figur 12 zeigt ein weiteres Ausführungsbeispiel der Erfindung. Wiederum ist eine Airbagabdeckung 101 in eine Schalttafel 103 integriert. Auch in dieser Ausgestaltungsvariante ist eine Rückwand 113 mit der Schalttafel 103 verbunden.

In dem durch die Rückwand 113, die Schalttafel 103 und die Airbagabdeckung 101 gebildeten Hohlraum ist, geführt durch ein Kolbengehäuse 107, ein Kolben mit verformbarer Oberfläche 105 angeordnet. Diese verformbare Oberfläche ist bevorzugt derart ausgeführt, dass sie in ihrem Verhalten dem eines Airbagsackes entspricht, sie beispielsweise über die gesamte der Airbagabdeckung 101 zugewandte Oberfläche hinweg reversibel verformbar ist. Auf diese Weise kann das Auftreffen eines sich füllenden Airbags auf die Airbagabdeckung realistisch nachgebildet werden.

Ein Gasraum 108 wird in diesem Ausführungsbeispiel durch die der Airbagabdeckung 101 abgewandte Seite des Kolbens mit verformbarer Oberfläche 105 und das Kolbengehäuse 107 gebildet.

Die zur Erzeugung eines sich in dem Gasraum 108 ausbreitenden Druckstoßes und/oder eines sich in dem Gasraum 108 aufbauenden integralen Druckes vorgesehene Einrichtung besteht in diesem Ausführungsbeispiel aus einer Antriebseinheit 121, welche die Generierung eines Gasdruckes bewirkt und bevorzugt als pyrotechnischer Kaltgasgenerator ausgeführt ist, einem mit der Antriebseinheit 121 über die Zuleitung 122 verbundenem Druckspeicher 115, der den Druckspeicher 115 und den Gasraum 108 verbindenden Zuleitung 112 und einer zwischen dem Druckspeicher 115 und der Zuleitung 112 vorgesehenen Drosseleinheit 111.

Der Vorteil einer derart ausgestalteten Einrichtung zur Erzeugung eines sich in dem Gasraum 108 ausbreitenden Druckstoßes und/oder eines sich in dem Gasraum 108 aufbauenden integralen Druckes besteht darin, dass mit ihr der Einfluss fertigungstechnisch bedingter Schwankungen in den Drücken, welche Antriebseinheiten 121 zur Verfügung stellen, minimiert werden können, ehe der Kolben 105 mit ihnen beaufschlagt wird. Wird beispielsweise als Antriebseinheit ein pyrotechnischer Kaltgasgenerator eingesetzt, der einen Druck von 350 bar erzeugt, und dabei Schwankungen von +/- 20 bar unterliegt, so ist der Druckspeicher so ausgelegt, dass durch Expansion des Gasvolumens in ihm ein Druck von etwa 20 bar herrscht, wobei dieser Druck mittels des Druckstellers 123, welcher das in dem Druckspeicher 115 zur Verfügung stehende Volumen einstellt, regulierbar ist. Auf diese Weise lässt sich die Druckschwankung auf ca. +/- 1 bis 2 bar reduzieren. Im Weiteren besteht die Möglichkeit, mittels der Drosseleinheit 111 den im Druckspeicher 115 vorherrschenden Druck weiter zu reduzieren, ehe der Kolben 105 mit diesem beaufschlagt wird. Hierdurch können die Druckschwankungen der Antriebseinheit weiter reduziert werden. Zudem kann durch Einstellung der Drosseleinheit die Zeit variiert werden, bis zu welcher der Kolben 105 auf die Airbagabdeckung 101 trifft, was einer Variation der Aufblaszeit eines Airbagsackes gleich kommt. Insoweit bietet die Drosseleinheit 111 eine weitere Möglichkeit, die Untersuchungsbedingungen gezielt zu variieren.

Zur Kontrolle des Druckes in dem Druckspeicher 115 bzw. dem Gasraum 108 sind hierin Druckmessvorrichtungen 117 bzw. 119 vorgesehen, welche in Kombination mit dem erwähnten Drucksteller 123 und der Drosseleinheit 111 eine exakte Regelung des sich in dem Gasraum 108 ausbreitenden Druckstoßes und/oder sich aufbauenden integralen Druckes erlauben. Zudem besteht die Möglichkeit, über diese Druckdaten und die Geometrie des Gasraums auf die Kraft zurückzuschließen, mit welcher der Kolben 105 auf die Airbagabdeckung 101 einwirkt.

Darüber hinaus sind zur direkten Messung der Kraft, mit welcher der Kolben und die Airbagabdeckung beaufschlagt werden, bzw. der Öffnungskraft, Kraftsensoren 125 vorgesehen, welche über eine Verbindungsplatte 109 mit dem Kolbengehäuse 107 in Kontakt stehen. Bei einer isotropen Druckausbreitung in dem Gasraum 108 erfährt das Kolbengehäuse eine Art Rückstoßkraft, die von der Schalttafel weggerichtet ist, welche zunächst auf die Verbindungsplatte 109 und dann auf die Kraftsensoren 125 übertragen wird. Diese übertragene Kraft registrieren die Kraftsensoren 125 und ermöglichen mit den erhaltenen Daten die Bestimmung der auf die Airbagabdeckung einwirkenden Kraft und somit die Bestimmung der für die Öffnung der Airbagabdeckung erforderlichen Öffnungskraft. Dies geschieht offensichtlich dadurch, dass die Öffnungskraft sukzessive so lange erhöht wird, bis die Airbagabdeckung öffnet.

Die Ausgestaltungsvariante der Figur 12 kann dabei selbstverständlich dahingehend abgewandelt werden, dass sich der Kolben 105 nicht über die gesamte Breite der Airbagabdeckung 101 erstreckt, sondern nur auf einen Teilbereich. Die Anordnung des Kolbens kann vorteilhafterweise dabei, wie in den anderen Ausführungsvarianten angedeutet, variabel gestaltet werden.

### Bezugszeichenliste

- 10: Vorsehen gasdichter Gasraum
- 12: Zünden pyrotechnischer Ladung
- 14: Beaufschlagen Airbagabdeckung mit Druckstoß und/oder inte- gralem Druck
- 16: Ermittlung der Öffnungskraft
- 18: Außenschicht der Schalttafel
- 19: Innenschicht der Schalttafel
- 20a: Befestigungseinrichtung
- 20b: Befestigungseinrichtung
- 22: Vorderseite Airbagabdeckung
- 23: Rückseite Airbagabdeckung
- 25a: Ausfräsung
- 25b: Ausfräsung
- 27a: Luftsackführung
- 27b: Luftsackführung
- 29: Gasraum
- 29': Gasraum
- 31a: Dichtungsmittel
- 31b: Dichtungsmittel
- 33: Rückwand
- 33': Rückwand
- 35: Pyrotechnische Ladung mit Zündvorrichtung
- 37: Träger
- 39: Zuführöffnung
- 41: Gaszufuhr
- 43: Pyrotechnische Ladung mit Zündvorrichtung
- 45: Blende
- 50: Gasraum
- 52: Pyrotechnische Ladung mit Zündvorrichtung
- 54: Aufnahme
- 56a: Projektil
- 56b: Projektil
- 56c: Projektil
- 57: Ausformung
- 58: Hohlraum
- 59a: Änderung der Position
- 59b: Änderung der Position
- 62a: Führungsfläche
- 62b: Führungsfläche
- 64: Einlage
- 70: Gasraum
- 72: Pyrotechnische Ladung mit Zündvorrichtung
- 74: Kolben
- 76: Stößel
- 78: Zylinder
- 82: Heiz-/Kühleinrichtung
- 83: Heiz-/Kühleinrichtung
- 84: Thermische Isolierung
- 85: Thermische Isolierung
- 87: Halten der pyrotechnischen Ladung auf definierter Tempera- tur
- 101: Airbagabdeckung
- 103: Schalttafel
- 105: Kolben mit verformbarer Oberfläche
- 107: Kolbengehäuse
- 108: Gasraum
- 109: Verbindungsplatte
- 111: Drosseleinheit
- 112: Zuleitung
- 113: Rückwand
- 115: Druckspeicher
- 117: Druckmessvorrichtung
- 119: Druckmessvorrichtung
- 121: Antriebseinheit
- 122: Zuleitung
- 123: Drucksteller
- 125: Kraftsensoren

## Patentansprüche

1. Verfahren zur Untersuchung eines Öffnungsvorganges einer Airbagabdeckung ohne Verwendung eines Airbagmoduls mit den Verfahrensschritten
- des Vorsehens (10) mindestens eines gasdichten Gasraums (29; 50);
- des Erzeugens (12) eines sich in dem Gasraum (29; 50) ausbreitenden Druckstoßes und/oder eines sich in dem Gasraum (29; 50) aufbauenden integralen Druckes;
- des indirekten, zumindest lokalen Beaufschlagen (14) der Airbagabdeckung (22, 23) mit dem Druckstoß oder dem integralen Druck,
wobei der Gasraum (29; 50) teilweise durch die Rückseite (23) der Airbagabdeckung begrenzt wird,
**dadurch gekennzeichnet, dass** der Druckstoß und/oder der integrale Druck durch Zünden einer in dem Gasraum (29; 50) angeordneten pyrotechnischen Ladung (35; 52) erzeugt wird, wobei der Druckstoß und/oder integrale Druck indirekt auf die Airbagabdeckung übertragen wird mittels eines Projektils, eines Stößels oder eines Kolbens mit verformbarer Oberfläche.

2. Verfahren nach Anspruch 1,
**dadurch gekennzeichnet, dass** die pyrotechnische Ladung (35; 52) zumindest zeitweise auf einer definierten Temperatur gehalten wird, insbesondere auf einer Temperatur von ···35°C oder +85°C, vorzugsweise wenigstens unmittelbar vor der Zündung der pyrotechnischen Ladung.

3. Verfahren nach einem der Ansprüche 1 oder 2,
**dadurch gekennzeichnet, dass** der Druckstoß und/oder der integrale Druck indirekt mittels wenigstens eines Projektils (56a; 56b) auf die Airbagabdeckung (22, 23) übertragen wird.

4. Verfahren nach Anspruch 3,
**dadurch gekennzeichnet, dass** der Ort der Krafteinwirkung auf die Airbagabdeckung (22, 23) durch die anfängliche Ausrichtung und Anordnung des wenigstens einen Projektils (56a; 56b) relativ zur Airbagabdeckung (22, 23) beeinflusst wird.

5. Verfahren nach einem der Ansprüche 3 bis 4,
**dadurch gekennzeichnet, dass** der Ort der Krafteinwirkung auf die Airbagabdeckung (22, 23) durch die geometrische Gestalt des verwendeten wenigstens einen Projektils (56a; 56b) beeinflusst wird.

6. Verfahren nach einem der Ansprüche 3 bis 5,
**dadurch gekennzeichnet, dass** das wenigstens eine Projektil (56a; 56b) zumindest bis zum Auftreffen auf der Airbagabdeckung (22, 23) geführt wird, vorzugsweise auch darüber hinaus.

7. Verfahren nach einem der Ansprüche 3 bis 6,
**dadurch gekennzeichnet, dass** das wenigstens eine Projektil (56a; 56b) beim Auftreffen auf die Airbagabdeckung (22, 23) zumindest teilweise verformt wird.

8. Verwenden des Verfahrens nach einem der Ansprüche 1 bis 7 zur Ermittlung einer für die Öffnung einer Airbagabdeckung (22, 23) erforderlichen Öffnungskraft, insbesondere in Abhängigkeit vom Ort der Beaufschlagung der Airbagabdeckung (22, 23) mit der Öffnungskraft.

9. Vorrichtung zur Untersuchung eines Öffnungsvorganges einer A-rbagabdeckung (22, 23) ohne Verwendung eines Airbagmoduls mit wenigstens einem gasdichten Gasraum (29; 52) und einer Einrichtung (35; 39; 52) zur Erzeugung eines sich in den Gasraum (29; 52) ausbreitenden Druckstoβes und/oder eines sich in dem Gasraum (29; 52) aufbauenden integralen Druckest wobei der gasdichte Gasraum (29; 52) teilweise durch die Rückseite (23) der Airbagabdeckung begrenzt ist,
**dadurch gekennzeichnet, dass** als Einrichtung (35; 52; 39); zur Erzeugung des Druckstoßes und/oder des integralen Druckes eine zündbare pyrotechnische Ladung (35; 52) in dem Gasraum (29; 52) angeordnet ist.

10. Vorrichtung nach Anspruch 9,
**dadurch gekennzeichnet, dass** eine Heiz- und/oder Kühleinrichtung (82; 83) für die pyrotechnische Ladung (35; 52) vorgesehen ist, welche vorzugsweise zumindest teilweise von der Umgebung thermisch entkoppelt ist.

11. Vorrichtung nach einem der Ansprüche 9 bis 10,
**dadurch gekennzeichnet, dass** der gasdichte Gasraum (52) teilweise durch wenigstens ein Projektil (56a; 56b) begrenzt ist, welches unter Krafteinwirkung von anderen Begrenzungsflächen (54) des gasdichten Gasraumes (50) abstrennbar ist.

12. Vorrichtung nach Anspruch 11,
**dadurch gekennzeichnet, dass** das wenigstens eine Projektil (56a; 56b) zwischen der Einrichtung (35; 39; 52) zur Erzeugung des Druckstoßes und/oder des integralen Druckes und der Rückseite (23) der Airbagabdeckung angeordnet ist.

13. Vorrichtung nach einem der Ansprüche 11 oder 12,
**dadurch gekennzeichnet, dass** das wenigstens eine Projektil eine in Richtung der Rückseite der Airbagabdeckung weisende Ausformung aufweist, welche vorzugsweise unter Krafteinwirkung zumindest teilweise verformbar ist.

14. Vorrichtung nach einem der Ansprüche 11 bis 13,
**dadurch gekennzeichnet, dass** die Einrichtung zur Erzeugung (35; 39; 52) eines Druckstoßes und/oder eines integralen Druckes sowie das wenigstens eine Projektil an verschiedenen Orten relativ zur Airbagabdeckung (22, 23) anordnbar sind.

15. Vorrichtung nach einem der Ansprüche 11 bis 14,
**dadurch gekennzeichnet, dass** die Ausrichtung des wenigstens einen Projektils (56b) relativ zur Airbagabdeckung (22, 23) variabel ist.

16. Vorrichtung nach einem der Ansprüche 11 bis 15,
**dadurch gekennzeichnet, dass** zur wenigstens abschnittsweisen Führung des wenigstens einen Projektils (56a 56b) eine Führung (62a, 62b) für das wenigstens eine Projektil vorgesehen ist,

17. Vorrichtung nach einem der Ansprüche 11 bis 16,
**dadurch gekennzeichnet, dass** eine Aufnahme (54) vorgesehen ist, welche zusammen mit dem wenigstens einen Projektil (56a; 56b) den gasdichten Gasraum (50) ausbildet, wobei die Aufnahme (54) vorzugsweise eine Außenwandung mit rechteckigem Querschnitt aufweist.

18. Vorrichtung nach Anspruch 17,
**dadurch gekennzeichnet, dass** das wenigstens eine Projektils (56a; 56b) teilweise über die Außenwandung der Aufnahme (54) stülpbar ist, wobei die überstülpte Fläche der Außenwandung vorzugsweise als wenigstens abschnittsweise Führung (62a, 62b) für das wenigstens eine Projektil (56a; 56b) ausgebildet ist.

19. Vorrichtung nach einem der Ansprüche 17 bis 18,
**dadurch gekennzeichnet, dass** das wenigstens eine Projektil (56a; 56b) auf die Aufnahme (54) auflaminiert ist.

20. Vorrichtung nach einem der Ansprüche 11 bis 19,
**dadurch gekennzeichnet, dass** das wenigstens eine Projektil (56a; 56b) aus verformbarem Material gefertigt ist, vorzugsweise aus Kevlar ®.

21. Vorrichtung nach einem der Ansprüche 11 bis 20,
**dadurch gekennzeichnet, dass** das wenigstens eine Projektil mit einer Verstärkung (64) versehen ist, welche insbesondere durch eine Metalleinlage (64) gebildet ist und vorzugsweise auf der der Airbagabdeckung (22, 23) abgewandten Seite des wenigstens einen Projektils (56b) angeordnet ist.

22. Verwendung einer Vorrichtung nach einem der Ansprüche 9 bis 21 zur Ermittlung einer für die Öffnung einer Airbagabdeckung (22, 23) erforderlichen Öffnungskraft, insbesondere in Abhängigkeit von dem Ort der Beaufschlagung der Airbagabdeckung (22,23) mit der Öffnungskraft.

## Claims

1. A method of testing an opening procedure of an airbag cover without the use of an airbag module with the
method steps:
- the provision (10) of at least one gas-tight gas space (29; 50);
- the production (12) of a pressure surge spreading in the gas space (29; 50) and/or an integral pressure accumulating in the gas space (29; 50);
- the indirect, at least local action (14) upon the airbag cover (22, 23) with the pressure surge or the integral pressure,
wherein the gas space (29; 50) is bounded in part by the rear side (23) of the airbag cover, **characterized in that** the pressure surge and/or the integral pressure is or are produced by igniting a pyrotechnic charge (35; 52) situated in the gas space (29; 50), wherein the pressure surge and/or the integral pressure is or are transmitted indirectly to the airbag cover by means of a projectile, a ram or a piston with a deformable surface.

2. A method according to claim 1. **characterized in that** the pyrotechnic charge (35; 52) is held at least temporarily at a defined temperature, in particular at a temperature of -35°C or +85°C, preferably at least immediately before the ignition of the pyrotechnic charge.

3. A method according to one of claims 1 or 2, **characterized in that** the pressure surge and/or the integral pressure is or are transmitted indirectly to the airbag cover (22, 23) by means of at least one projectile (56a; 56b).

4. A method according to claim 3, **characterized in that** the location of the force effect upon the airbag cover (22, 23) is influenced by the initial orientation and arrangement of the at least one projectile (56a; 56b) relative to the airbag cover (22, 23).

5. A method according to one of claims 3 to 4, **characterized in that** the location of the force effect upon the airbag cover (22, 23) is influenced by the geometrical shape of the at least one projectile (56a; 56b) which is used.

6. A method according to any one of claims 3 to 5, **characterized in that** the at least one projectile (56a; 56b) is guided at least until encountering the airbag cover (22, 23), and preferably also thereafter.

7. A method according to any one of claims 3 to 6, **characterized in that** the at least one projectile (56a; 56b) is deformed at least in part when encountering the airbag cover (22, 23).

8. Use of the method according to any one of claims 1 to 7 for determining an opening force required to open an airbag cover (22, 23), in particular in a manner dependent upon the location of the airbag cover (22, 23) being acted upon with the opening force.

9. An apparatus for testing an opening procedure of an airbag cover (22, 23) without the use of an airbag module with at least one gas-tight gas space (29; 52) and one device (35; 39; 52) for producing a pressure surge spreading in the gas space (29; 52) and/or an integral pressure accumulating in the gas space (29; 52), wherein the gas-tight gas space (29; 52) is bounded in part by the rear side (23) of the airbag cover, **characterized in that** a pyrotechnic charge (35; 52) capable of being ignited is situated in the gas space (29; 52) as the device (35; 52; 39) for producing the pressure surge and/or the integral pressure.

10. An apparatus according to claim 9, **characterized in that** a heating and/or cooling device (82; 83) is provided for the pyrotechnic charge (35; 52) which is preferably thermally decoupled at least in part from the surroundings.

11. An apparatus according to one of claims 9 to 10, **characterized in that** the gas-tight gas space (52) is bounded in part by at least one projectile (56a; 56b) which is capable of being separated from other boundary faces (54) of the gas-tight gas space (50) by the action of force.

12. An apparatus according to claim 11, **characterized in that** the at least one projectile (56a; 56b) is arranged between the device (35; 39; 52) for producing the pressure surge and/or the integral pressure and the rear side (23) of the airbag cover.

13. An apparatus according to one of claims 11 or 12, **characterized in that** the at least one projectile has a shaping which faces in the direction of the rear side of the airbag cover and which is preferably capable of being deformed at least in part under the action of force.

14. An apparatus according to any one of claims 11 to 13, **characterized in that** the device for the production (35; 39; 52) of a pressure surge and/or an integral pressure as well as the at least one projectile are capable of being arranged at various locations relative to the airbag cover (22, 23).

15. An apparatus according to any one of claims 11 to 14, **characterized in that** the orientation of the at least one projectile (56b) is variable relative to the airbag cover (22, 23).

16. An apparatus according to any one of claims 11 to 15, **characterized in that** a guide (62a, 62b) for the at least one projectile (56a 56b) is provided in order to guide the at least one projectile at least in part.

17. An apparatus according to any one of claims 11 to 16, **characterized in that** a receiving means (54) is provided which together with the at least one projectile (56a; 56b) forms the gas-tight gas space (50), wherein the receiving means (54) preferably has an outer wall with a rectangular cross-section.

18. An apparatus according to claim 17, **characterized in that** the at least one projectile (56a; 56b) is capable of being fitted in part over the outer wall of the receiving means (54), wherein the face of the outer wall fitted over is preferably designed in the form of at least one partial guide (62a, 62b) for the at least one projectile (56a; 56b).

19. An apparatus according to one of claims 17 to 18, **characterized in that** the at least one projectile (56a; 56b) is laminated onto the receiving means (54).

20. An apparatus according to any one of claims 11 to 19, **characterized in that** the at least one projectile (56a; 56b) is produced from deformable material, preferably from Kevlar^{®}.

21. An apparatus according to any one of claims 11 to 20, **characterized in that** the at least one projectile is provided with a reinforcement (64) which is formed in particular by a metallic inlay (64) and is preferably arranged on the side of the at least one projectile (56b) facing away from the airbag cover (22, 23).

22. Use of an apparatus according to any one of claims 9 to 21 for determining an opening force required to open an airbag cover (22, 23), in particular in a manner dependent upon the location of the airbag cover (22, 23) being acted upon with the opening force.

## Revendications

1. Procédé d'examen de l'opération d'ouverture de la couverture d'un coussin de sécurité (airbag) sans utiliser le module de coussin de sécurité,
procédé comprenant les étapes suivantes :
- disposer (10) d'au moins un volume (29, 50) étanche aux gaz,
- générer (12) une onde de pression se développant dans le volume de gaz (29, 50) et/ou la pression intégrale se développant dans le volume de gaz (29, 50),
- solliciter indirectement au moins localement (14) la couverture du coussin de sécurité (22, 23) avec l'onde de pression ou avec la pression intégrale,
procédé selon lequel,
le volume de gaz (29, 50) est délimité partiellement par le côté arrière (23) de la couvercle du coussin d'air,
procédé **caractérisé en ce qu'**
- on génère l'onde de pression et/ou la pression intégrale en déclenchant une charge pyrotechnique (35, 52) placée dans le volume de gaz (29, 50), et
- l'onde de pression et/ou la pression intégrale sont transmises indirectement à la couverture du coussin de sécurité par l'intermédiaire d'un projectile, d'un poussoir ou d'un piston muni d'une surface supérieure déformable.

2. Procédé selon la revendication 1,
**caractérisé en ce qu'**
on maintient la charge pyrotechnique (35, 52) au moins provisoirement à une température définie, notamment à une température de -35°C ou +85°C, de préférence au moins directement avant le déclenchement de la charge pyrotechnique.

3. Procédé selon l'une des revendications 1 ou 2,
**caractérisé en ce que**
l'onde de pression et/ou la pression intégrale sont générées indirectement par au moins un projectile (56a, 56b) sur la couverture du coussin de sécurité (22, 23).

4. Procédé selon la revendication 3,
**caractérisé en ce que**
l'emplacement de l'action de la force sur la couverture du coussin de sécurité (22,, 23), est influencé par la direction initiale et le montage du projectile (56a, 56b) par rapport à la couverture du coussin de sécurité (22, 23).

5. Procédé selon l'une des revendications 3 à 4,
**caractérisé en ce que**
l'emplacement de l'action de la force sur la couverture du coussin de sécurité (22, 23), est influencé par la structure géométrique du projectile utilisé (56a, 56b).

6. Procédé selon l'une des revendications 3 à 5,
**caractérisé en ce qu'**
au moins un projectile (56a, 56b) est guidé jusqu'à son impact sur la couverture du coussin de sécurité (22, 23), de préférence même au-delà.

7. Procédé selon l'une des revendications 3 à 6,
**caractérisé en ce qu'**
lors de son impact sur la couverture du coussin de sécurité (22, 23), un projectile (56a, 56b) se déforme au moins en partie.

8. Utilisation du procédé selon l'une des revendications 1 à 7, pour déterminer une force nécessaire à l'ouverture de la couverture du coussin de sécurité (22, 23), notamment en fonction de l'endroit où la force d'ouverture sollicite la couverture du coussin de sécurité (22, 23).

9. Dispositif d'examen d'un processus d'ouverture de la couverture du coussin de sécurité (22, 23) sans utiliser de module de coussin de sécurité comportant au moins un volume de gaz (29, 52) étanche aux gaz ainsi qu'une installation (35, 39, 52) pour générer une onde de pression se développant dans le volume de gaz (29, 52) et/ou une pression intégrale se développant dans le volume de gaz (29, 52),
* le volume (29, 52) étanche aux gaz étant délimité partiellement par le côté arrière (23) de la couverture du coussin de sécurité,
dispositif **caractérisé en ce que**
l'installation (35, 52, 39) générant l'onde de pression et/ou la pression intégrale, comporte une charge pyrotechnique (35, 52) déclenchable dans le volume de gaz (29, 52).

10. Dispositif selon la revendication 9,
**caractérisé par**
un dispositif de chauffage et/ou de refroidissement (82, 83) de la charge pyrotechnique (35, 52) découplé thermiquement au moins en partie par rapport à l'environnement.

11. Dispositif selon l'une des revendications 9 à 10,
**caractérisé en ce que**
le volume (52) étanche aux gaz, est délimité partiellement par au moins un projectile (56a, 56b) qui, sous l'effet de la force, peut être séparé des autres surfaces limites (54) du volume de gaz (50) étanche.

12. Dispositif selon la revendication 11,
**caractérisé par**
au moins un projectile (56a, 56b) se trouve entre l'installation (35, 39, 52) générant l'onde de pression et/ou la pression intégrale et le côté arrière (23) de la couverture du coussin de sécurité.

13. Dispositif selon l'une des revendications 11 ou 12,
**caractérisé en ce qu'**
au moins un projectile a une déformation dirigée vers le côté arrière de la couverture du coussin de sécurité et qui se déforme au moins en partie, de préférence sous l'effet de la force.

14. Dispositif selon l'une des revendications 11 à 13,
**caractérisé en ce que**
l'installation (35, 39, 52) pour générer une onde de pression et/ou une pression intégrale ainsi qu'au moins un projectile, peuvent être montés en différents endroits par rapport à la couverture du coussin de sécurité (22, 23).

15. Dispositif selon l'une des revendications 11 à 14,
**caractérisé en ce qu'**
au moins un projectile (56b) peut être dirigé de manière variable par rapport à la couverture du coussin de sécurité (22, 23).

16. Dispositif selon l'une des revendications 11 à 15,
**caractérisé par**
un guidage (62a, 62b) pour guider par segments au moins un projectile (56, 56b).

17. Dispositif selon l'une des revendications 11 à 16,
**caractérisé par**
un logement (54) qui forme le volume de gaz (50) étanche, avec au moins un projectile (56a, 56b), et
le logement (54) a de préférence une paroi extérieure de section rectangulaire.

18. Dispositif selon la revendication 17,
**caractérisé en ce qu'**
au moins un projectile (56a, 56b) peut être rabattu partiellement pardessus la paroi extérieure du logement (54),
- la surface rabattue de la paroi extérieure étant réalisée de préférence comme au moins un guidage par segments (62a, 62b) d'au moins un projectile (56a, 56b).

19. Dispositif selon l'une des revendications 17 ou 18,
**caractérisé en ce qu'**
au moins un projectile (56a, 56b) est laminé sur le logement (54).

20. Dispositif selon l'une des revendications 11 à 19,
**caractérisé en ce qu'**
au moins un projectile (56a, 56b) est réalisé en matière déformable de préférence en Kevlar (Marque déposée).

21. Dispositif selon l'une des revendications 11 à 20,
**caractérisé en ce qu'**
au moins un projectile est muni d'un renforcement (64) constitué notamment par un insert métallique (64) et de préférence installé sur le côté d'au moins un projectile (56b) non tourné vers la couverture du coussin de sécurité (22, 23).

22. Utilisation d'un dispositif selon l'une des revendications 9 à 21, pour déterminer la force d'ouverture nécessaire à l'ouverture de la couverture du coussin de sécurité (22, 23), notamment en fonction de l'emplacement de la sollicitation du couvercle de coussin de sécurité (22, 23) par la force d'ouverture.
